# DEMANDE DE BREVET EUROPEEN

(11) **EP 4 844 261 A1**
(43) Date de publication de la demande: **25.11.2026**
(21) Numéro de dépôt: 26174126.8
(22) Date de dépôt: 23.04.2026
(51) Int. Cl.: F17C 5/06, G01F 15/00

(54) **INSTALLATION DE REMPLISSAGE SEMI-AUTOMATIQUE DE RÉCIPIENT SOUS PRESSION**

(30) Priorité: 23.05.2025 FR 2505577
(71) Demandeur: L'Air Liquide, Société Anonyme pour l'Etude et l'Exploitation des Procédés Georges Claude, 75007 Paris (FR)
(72) Inventeur: LEGERON, Wilfried, 75007 Paris (FR); LE DIRACH, Jocelyn, 75007 PARIS (FR); DURAND, Hervé, 75007 PARIS (FR)
(74) Mandataire: Air Liquide

(57) **Abrégé**

L'invention concerne une installation de remplissage d'un récipient avec du fluide sous pression, comprenant un ensemble de sources de fluides, un ensemble de raccords de liaison comprenant chacun une vanne de raccord, un organe de commande pour commander un réseau de vannes, une unité de pilotage, une vanne de protection en série entre le récipient et une vanne de raccord, et un capteur configuré pour opérer au moins une mesure de pression et pour fournir la mesure à l'unité de pilotage, l'unité de pilotage étant configurée pour déclencher une alarme sonore ou visuelle lorsque cette mesure est supérieure à une valeur seuil donnée et pour piloter l'organe de commande automatiquement de sorte que l'organe de commande commande la vanne de protection et la vanne de raccord simultanément en réponse au déclenchement d'alarme.

## Description

La présente invention porte sur une installation de remplissage semi-automatique de récipients de fluide sous pression et sur un procédé de remplissage de récipients de fluide sous pression.

On connaît de l'art antérieur des centres de remplissage de récipients de fluide sous pression. La demande FR2794216 A1 divulgue une installation de remplissage d'un volume de conditionnement avec du gaz comportant un ensemble de sources de gaz d'alimentation, au moins un raccord de liaison du ou de chaque volume de conditionnement, un réseau de vannes commandées, reliant sélectivement la sortie de chaque source de gaz d'alimentation à chaque raccord, et une unité de pilotage du réseau de vannes adaptée pour commander l'état des vannes pour le remplissage du ou de chaque volume de conditionnement avec un gaz conforme à la spécification donnée, l'unité de pilotage comporte des moyens d'entrée d'une recette constituée d'une séquence de procédures, chaque procédure décrivant une tâche élémentaire pouvant être mise en œuvre par le réseau de vannes sous la commande de l'unité de pilotage, et l'unité de pilotage comporte des moyens de traitement des procédures successives constituant la recette, lesquels moyens sont adaptés pour commander le réseau de vannes pour la mise en œuvre séquentielle des tâches élémentaires décrites successivement dans la séquence de procédures constituant la recette.

Ce type d'installation ne permet pas d'optimiser l'organisation du remplissage notamment car cette installation de l'art antérieur nécessite une présence constante d'un opérateur. Il est nécessaire de gérer les flux de récipients entrant et sortant du site de remplissage comprenant l'installation. Les opérateurs doivent notamment décharger, charger les camions, raccorder les récipients à remplir aux installations, effectuer des maintenances préventives sur l'installation. Aussi pour répondre aux besoins des clients, remplir suffisamment de récipients et assurer la sécurité des opérations, un opérateur doit être présent constamment. Le travail de nuit peut notamment devenir indispensable avec ce type d'installation afin d'assurer les besoins des clients.

La présente invention vise à remédier efficacement à ces inconvénients en proposant une installation qui permette de s'affranchir de la présence d'opérateur.

L'invention concerne ainsi une installation de remplissage d'au moins un récipient avec du fluide sous pression, comprenant :
- un ensemble de sources de fluides,
- un ensemble de raccords de liaison d'au moins un récipient, chaque raccord de liaison comprenant au moins une vanne de raccord,
- un réseau de vannes reliant sélectivement la sortie de chaque source de fluide à chaque raccord de liaison,
- au moins un organe de commande pour commander le réseau de vannes et ladite au moins une vanne de raccord,
- une unité de pilotage adaptée pour piloter l'organe de commande,

Et l'installation comprend :
- une vanne de protection en série entre le récipient et la vanne de raccord, et
- au moins un capteur configuré pour opérer au moins une mesure de pression, et pour fournir la mesure de pression à l'unité de pilotage, et
   l'unité de pilotage est configurée pour traiter la mesure de pression et déclencher une alarme sonore ou visuelle lorsque la mesure de pression est supérieure à une valeur de pression seuil donnée, pour enregistrer la mesure de pression dans une base de données, et pour piloter l'organe de commande automatiquement de sorte que l'organe de commande commande la vanne de protection et la vanne de raccord simultanément en réponse au déclenchement de l'alarme.

Selon le cas, l'invention peut comprendre l'une ou plusieurs des caractéristiques énoncées ci-après.

L'installation comprend un sonomètre configuré pour enregistrer un son émis à un niveau de décibel, et l'unité de pilotage est configurée pour déterminer un niveau de fuite en fonction du niveau de décibel du son émis et pour commander le réseau de vannes, la vanne de protection et la vanne de raccord en fonction du niveau de fuite déterminé.

L'installation comprend une caméra thermique capturant une image thermique du récipient et l'unité de pilotage étant configurée pour réceptionner l'image thermique et pour déterminer un niveau de remplissage du récipient en fonction de l'image thermique.

L'unité de pilotage comporte des moyens de réception de données de description, les données de description comprenant :
- un ensemble d'ordres de fabrication, chaque ordre de fabrication comprenant un ensemble de tâches à exécuter,
- une durée pour chaque tâche à exécuter, chaque tâche à exécuter pouvant être mise en œuvre par le réseau de vannes et les vannes de raccord,
- une durée disponible pour le remplissage du récipient,
   l'unité de pilotage est alors configurée pour calculer un temps de remplissage égal à la somme des durées de tâches à exécuter et déterminer un ordre des tâches à exécuter de sorte que le temps de remplissage calculé est inférieur à la durée disponible, que le temps de remplissage est minimal et qu'un maximum d'ordres de fabrication est exécuté pendant la durée disponible.

Les tâches à exécuter sont parmi : fermeture et/ou ouverture des vannes, purger un raccord de liaison, faire le vide dans tout ou partie de l'installation.

L'installation comprend au moins un moyen visuel configuré pour afficher un premier message lorsqu'un remplissage est en cours d'exécution et/ou pour afficher un second message lorsqu'une extrémité d'un raccord de liaison parmi l'ensemble des raccords de liaison est libre.

L'installation comprend un détecteur de gaz configuré pour réaliser une mesure de concentration d'au moins un gaz et pour fournir la mesure de concentration du gaz à l'unité de pilotage, l'unité de pilotage étant configurée pour déclencher une alarme sonore ou visuelle lorsque la mesure de concentration est supérieure à une valeur de concentration seuil prédéfinie et/ou pour piloter l'organe de commande automatiquement en fonction de la mesure de concentration.

L'invention concerne en outre un procédé de remplissage de récipients par un fluide à une pression finale au moyen d'une installation de l'invention comprenant les étapes suivantes :
- mise en place et raccordement d'au moins un récipient dans l'installation au moyen du raccord de liaison,
- démarrage du pilotage automatique de l'installation au moyen de l'unité de pilotage,
- désengagement des récipients remplis.

Selon le cas, le procédé de l'invention peut comprendre l'une ou plusieurs des caractéristiques énoncées ci-après.

Le procédé de remplissage comprend une étape de détermination de la valeur de pression seuil.

L'invention sera mieux comprise à la lecture de la description qui suit et à l'examen de la figure qui l'accompagne. Cette figure n'est donnée qu'à titre illustratif mais nullement limitatif de l'invention.

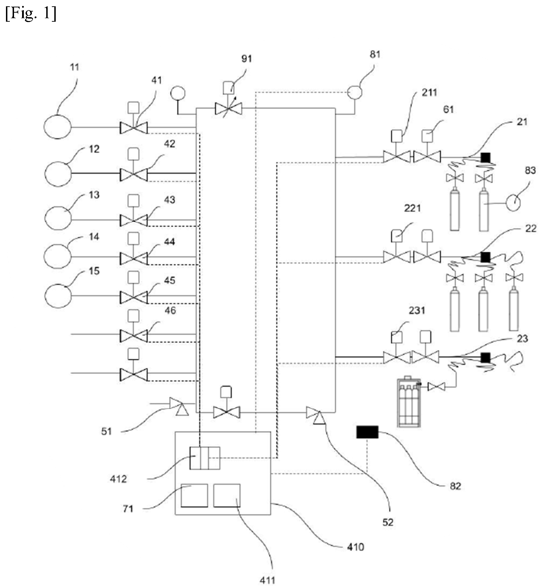

[Fig. 1] La figure 1 est une représentation schématique d'un mode de réalisation d'une installation de remplissage selon l'invention ;
En référence à la Fig. 1, l'installation de remplissage permet de remplir au moins un récipient avec du fluide sous pression. Le récipient peut être équipé d'une vanne de remplissage. L'installation de remplissage de l'invention peut remplir plusieurs récipients par exemple à 200 bar et/ou 300 bar. Par exemple, l'installation de remplissage permet le remplissage de bouteilles avec de l'azote, de l'oxygène, de l'argon, de l'hélium, du dioxyde de carbone, de l'hydrogène, ou encore avec un mélange de gaz. L'installation de remplissage comprend alors un ensemble de sources de fluides, 11, 12, 13, 14, 15. Par exemple l'installation de remplissage peut comprendre une source d'azote, une source d'oxygène, une source de dioxyde de carbone, une source d'hélium et une source d'argon. L'installation comprend aussi des raccords de liaison 21, 22, 23, encore appelés rampes, entre les sources de fluides 11, 12, 13, 14, 15 et le récipient à remplir. Ces raccords de liaison 21, 22, 23 sont par exemple des flexibles souples. Ces raccords de liaison 21, 22, 23 sont par exemple raccordés par une extrémité au récipient à remplir via une vanne de remplissage du récipient. Ces raccords de liaison 21, 22, 23 comprennent chacun aussi au moins une vanne de raccord 211, 221, 231. Cette vanne de raccord 211, 221, 231 permet de fermer le circuit de remplissage.

Chaque sortie de source de fluide 11, 12, 13, 14, 15 est raccordée respectivement à une vanne de distribution 41, 42, 43, 44, 45. Ces vannes de distribution 41, 42, 43, 44, 45 permettent l'écoulement du fluide au travers du raccord de liaison 21, 22, 23, puis selon l'ouverture des vannes de raccords 211, 221, 231, dans le(s) récipient(s). Si le(s) récipient(s) sont équipés de vannes de remplissage, le fluide s'écoulera dans le(s) récipient(s) selon l'ouverture de ces vannes de remplissage.

L'installation de remplissage comprend aussi un organe de commande 412. Cet organe de commande 412 permet de commander les vannes de l'installation, c'est-à-dire par exemple le réseau de vannes de distribution 41, 42, 43, 44, 45, et les vannes de raccord 211, 221, 231, afin de remplir le récipient et de stopper le remplissage lorsque par exemple la pression souhaitée dans le récipient est obtenue.

Selon un mode de réalisation, l'installation de remplissage comprend au moins une vanne de mise à l'air 46 et une vanne de mise sous vide 51. Selon un mode de réalisation, l'installation de remplissage comprend au moins une vanne de régulation 91. Selon un mode de réalisation, l'installation de remplissage comprend au moins un terminal de pesée (non représenté) et/ou au moins un débitmètre massique (non représenté). Selon un mode de réalisation, l'installation de remplissage comprend au moins une soupape de sécurité 52. La soupape de sécurité 52 permet notamment de protéger les récipients des hautes pressions. Par exemple, si la pression excède la valeur de pression admissible par les récipients, alors la soupape de sécurité 52 permet de réduire la pression dans le circuit de fluide lorsque celle-ci dépasse un seuil admissible. Ce seuil admissible est une valeur de pression de sécurité prédéterminée.

L'organe de commande 412, dans un mode de réalisation, permet aussi de commander les vannes de mise à l'air 46 et la vanne de mise sous vide 51.

Un mélangeur peut être arrangé entre les vannes de distribution 41, 42, 43, 44, 45 et les raccords de liaison 21, 22, 23 permettant d'obtenir le mélange de fluides souhaité par un utilisateur pour remplir un récipient. L'organe de commande 412 commande alors ce mélangeur. Par exemple, la production d'un mélange de trois constituants, par exemple oxygène, azote, et dioxyde de carbone, est réalisée par l'injection successive des gaz.

L'installation comprend aussi une unité de pilotage 410, cette unité de pilotage 410 est adaptée pour piloter l'organe de commande 412 selon des données que l'unité de pilotage 410 reçoit. L'unité de pilotage 410 reçoit par exemple la composition du mélange de gaz pour le(s) récipient(s) à réaliser, une valeur de pression, ou encore une mesure de débit.

Pour s'affranchir d'un opérateur, l'unité de pilotage 410 est configurée pour piloter automatiquement l'organe de commande 412 en fonction des données qu'elle reçoit. Par exemple, en cours de remplissage, des évènements, comme une alarme liée à un dysfonctionnement du procédé ou liée à un problème de sécurité peuvent survenir. Ces évènements sont identifiés grâce à un envoi de données à l'unité de pilotage 410. Un évènement est par exemple un débranchement d'un raccord de liaison, une vanne qui ne s'ouvre pas, un gaz détecté dans l'atmosphère, une pression qui n'évolue pas ou encore une électrovanne qui a un temps de réponse anormalement lent. Ces évènements sont classés selon leur criticité. La donnée correspondante à un évènement est traitée, analysée, par l'unité de pilotage pour déterminer une commande à réaliser sur l'installation. Une fuite de gaz génère une chute de pression ou un son avec un certain niveau de décibel, par exemple. L'unité de pilotage 410 peut alors émettre une alarme de sécurité et arrêter le remplissage en fonction d'une mesure de pression. Une électrovanne qui présente un temps de réponse trop important à la commande de l'organe de commande 412 peut générer un temps de réponse à la commande important ou encore une valeur de pression différente de la valeur de pression attendue. L'unité de pilotage 410 peut alors émettre une alarme de procédé qui informe l'utilisateur sans arrêter le remplissage.

L'installation de l'invention doit alors pouvoir garantir la sécurité, la qualité du remplissage malgré ces évènements. L'installation de remplissage de l'invention comprend alors des éléments supplémentaires qui vont permettre de sécuriser le remplissage sans l'intervention d'un opérateur. L'installation comprend notamment au moins une vanne de protection 61. Cette vanne de protection 61 est une vanne placée en série entre au moins une vanne de raccord 211, 221, 231 et au moins un récipient. Cette vanne de protection 61 est commandée de la même façon que la vanne de raccord 211, 221, 231 par l'organe de commande. Cette vanne de protection 61 est commandée simultanément avec la vanne de raccord 211, 221, 231. Lorsque la vanne de raccord 211, 221, 231 est par exemple ouverte, la vanne de protection 61 est ouverte. Cette vanne de protection 61 permet en outre de limiter les pollutions dans l'installation et les récipients, si la vanne de raccord 211, 221, 231 est défectueuse.

L'installation de remplissage comprend aussi au moins un capteur 81 configuré pour opérer au moins une mesure d'au moins une variable. Ce capteur 81 est aussi configuré pour envoyer cette mesure à l'unité de pilotage 410. Cette mesure peut être une mesure de pression. L'unité de pilotage est alors configurée pour réceptionner et traiter par exemple cette mesure de pression et pour déclencher une alarme sonore ou visuelle lorsque la mesure est supérieure à une valeur de pression seuil donnée. La valeur de pression seuil donnée est une valeur enregistrée, prédéterminée, dans l'unité de pilotage par un opérateur, par exemple au moyen d'une interface homme machine, avant l'opération de remplissage. L'unité de pilotage 410 peut aussi être configurée pour enregistrer le dépassement de cette valeur de pression seuil dans une base de données, par exemple un journal d'alarmes reportant les incidents, les évènements. Grâce à cet enregistrement dans la base de données, un utilisateur peut analyser l'ensemble des données de dépassement par exemple pour ajuster la valeur de pression seuil ou encore planifier des maintenances préventives sur les équipements à des fréquences différentes. L'unité de pilotage 410 est aussi configurée, dans un mode de réalisation particulier, pour piloter automatiquement l'organe de commande 412 afin de commander le réseau de vannes de distribution 41, 42, 43, 44, 45, la vanne de protection 61 et la vanne de raccord 211, 221, 231 en réponse au déclenchement de l'alarme ou en fonction de la mesure effectuée.

Ainsi un opérateur dispose les récipients à remplir dans l'installation et les raccorde à un raccord de liaison 21, 22, 23. L'opérateur peut démarrer le remplissage automatique, par exemple directement via une instruction entrée dans l'unité de pilotage 410 au moyen d'une interface homme-machine. L'opérateur peut prévoir un démarrage du pilotage automatique en différé, c'est-à-dire programmer l'heure de démarrage du remplissage. L'unité de pilotage 410 gère ensuite l'ouverture et la fermeture des vannes du réseau de vannes de distribution 41, 42, 43, 44, 45, de la vanne de protection 61 et de la vanne de raccord 211, 221, 231 pour remplir les récipients. Lors du remplissage, le capteur de pression 81 permet de détecter par exemple une augmentation de pression, donc une valeur anormale. L'unité de pilotage 410 compare cette mesure à la valeur de pression seuil. Lorsque cette mesure est supérieure à la valeur de pression seuil, l'unité de pilotage 410 peut être configurée pour, par exemple, fermer toutes les vannes ou fermer au moins les vannes d'au moins un raccord de liaison 21, 22, 23. L'invention dès lors permet que l'unité de pilotage 410 soit capable de décider s'il faut poursuivre ou non un remplissage sans intervention humaine.

L'installation de l'invention permet aussi de planifier des remplissages successifs en enregistrant dans l'unité de pilotage 410 une séquence de remplissage. Ainsi, l'opérateur dispose tous les emballages, récipients requis sur les rampes de l'installation. Puis il démarre le pilotage automatique de l'installation. Dans un mode de réalisation, l'unité de pilotage 410 peut lister les opérations ou tâches nécessitant une intervention humaine avant que le remplissage automatique, c'est-à-dire sans intervention humaine, ne démarre. A la fin du remplissage, l'unité de pilotage 410 peut aussi indiquer à l'opérateur quelles sont les opérations ou tâches nécessitant une intervention humaine. Par exemple cette tâche nécessitant une intervention humaine est la fermeture des vannes de remplissage du récipient.

Dans un mode de réalisation, l'unité de pilotage 410 est commune à différentes installations. Dans ce cas, l'unité de pilotage 410 pilote notamment un ensemble d'organes de commande 412.

Dans un autre mode de réalisation, le capteur 81 envoie une mesure de pression à l'unité de pilotage 410 qui permet de détecter que la mise sous vide ou mise à l'air n'est pas effectuée.

Dans un mode de réalisation, l'installation comprend au moins un capteur de son 82, appelé aussi sonomètre. Si l'installation comprend plusieurs sonomètres 82, ils sont alors positionnés à différents endroits de l'installation. Par exemple, ces sonomètres 82 sont placés à proximité des raccords de liaison 21, 22, 23. L'unité de pilotage 410 peut alors identifier la localisation d'une fuite par exemple en analysant le son enregistré ou grâce à une multitude de capteurs de son 82 répartis dans l'installation.

Le capteur de son 82 enregistre un son à un certain niveau de décibel. L'unité de pilotage 410 est configurée pour recevoir le niveau de décibel du son enregistré. L'unité de pilotage 410 est aussi configurée pour déterminer un niveau de fuite en fonction du niveau de décibel du son enregistré et pour commander le réseau de vannes de distribution 41, 42, 43, 44, 45, la vanne de protection 61 et la vanne de raccord 211, 221, 231 en fonction du niveau de fuite déterminé. C'est un niveau de décibel seuil prédéterminé qui permet de confirmer s'il y a ou non une fuite.

Ainsi, si le capteur de pression 81 détecte une augmentation de pression ou le capteur de son 82 détecte une fuite au niveau du raccord de liaison 21, 22, 23, alors la vanne de raccord 211, 221, 231 de ce raccord de liaison 21, 22, 23, ainsi que la vanne de protection 61 du raccord de liaison 21, 22, 23 sont fermées. Cette fermeture simultanée de la vanne de protection 61 et de la vanne du raccord de liaison 21, 22, 23, permet de réduire le risque d'un endommagement de l'installation ou de la fuite d'un fluide. La vanne de protection 61 permet en outre de réduire le risque de fuite par redondance, c'est-à-dire par réplication du composant critique qu'est la vanne de raccord 211, 221, 231. Dans un autre exemple, seule la vanne de raccord 211 du raccord 21 et la vanne de protection 61 correspondante, c'est-à-dire connectée au même raccord de liaison 21, sont fermées. L'invention permet alors de poursuivre le remplissage de récipient(s) sur une autre partie de l'installation. La vanne de protection 61 est une vanne similaire à la vanne de raccord 211, 221, 231, c'est-à-dire de même conception.

La valeur de pression de seuil, le niveau de décibel seuil peuvent être déterminés par des essais. Des fuites sont, par exemple, intentionnellement engendrées à différents débits de fluides passant à travers les canalisations de l'installation, par exemple à travers les raccords de liaison 21, 22, 23. Ces fuites sont engendrées par exemple en débranchant une canalisation, ou en effectuant intentionnellement un mauvais raccord. Pour déterminer le niveau de décibel seuil, le son émis est alors enregistré par le sonomètre. La chute de valeur en débit ou pression correspondante est aussi enregistrée. Le niveau de décibel seuil est ensuite déterminé. Selon la valeur de décibel enregistrée, l'unité de pilotage 410 peut piloter la fermeture de certaines vannes.

Dans un autre mode de réalisation, c'est l'organe de commande 412 qui envoie un signal à l'unité de pilotage 410 lorsqu'il détecte un dysfonctionnement des vannes à la commande. L'unité de pilotage 410 enregistre dans une base de données l'information de dysfonctionnement de la vanne et pilote l'organe de commande 412 en fonction de cette information. Par exemple, si une vanne de raccord 211 dysfonctionne, l'unité de pilotage 410 peut arrêter le remplissage du raccord de liaison 21 correspondant et fermer la vanne de protection 61.

Selon un mode de réalisation, l'installation de remplissage comprend au moins une sonde de température infrarouge 83 disposée sur au moins un récipient dit témoin. Cette sonde de température infrarouge 83 permet de vérifier le remplissage effectif du récipient par une mesure de température. Dans un mode de réalisation, l'installation de remplissage comprend autant de sondes de température infrarouges 83 que de récipients remplis.

Dans un mode de réalisation, l'installation comprend au moins un détecteur de gaz. Le détecteur de gaz permet de mesurer la composition des gaz dans l'environnement et ainsi déterminer s'il y a une fuite de gaz. Le détecteur de gaz est configuré pour réaliser une mesure de concentration d'au moins un gaz et pour fournir la mesure de concentration du gaz à l'unité de pilotage 410. L'unité de pilotage 410 est configurée pour déclencher une alarme sonore ou visuelle lorsque la mesure de concentration est supérieure à une valeur de concentration seuil donnée et pour piloter l'organe de commande 412 automatiquement en fonction de la mesure de concentration. La valeur de concentration seuil est prédéfinie et enregistrée dans l'unité de pilotage 410.

Selon un mode de réalisation, l'installation de remplissage comprend une caméra thermique capturant une image thermique du récipient. L'unité de pilotage 410 est alors configurée pour réceptionner l'image thermique et pour identifier le niveau de remplissage du récipient. L'unité de pilotage 410 vérifie ainsi que le remplissage a été réalisé. Ainsi l'unité de pilotage 410 peut déterminer si le récipient est rempli ou si le récipient est vide. Ce mode de réalisation permet de s'affranchir d'un contrôle opérateur en fin de remplissage. Les récipients remplis sont en effet plus chauds en surface que des récipients non remplis. Habituellement, un opérateur vérifie que le remplissage est effectif en apposant sa main sur le récipient. Ce mode de réalisation décrit permet ainsi de vérifier que le récipient est rempli en cas de défaillance de l'installation quand il n'y a pas d'opérateur. Par exemple, un autre capteur de pression 81 est arrangé sur le raccord de liaison 21, 22, 23, cet autre capteur de pression 81 permet alors de confirmer la fin du remplissage. Si cet autre capteur de pression 81 est défaillant, l'image thermique permet de contrôler le bon remplissage. Dans un mode de réalisation, cette caméra thermique est complémentaire à la sonde de température infrarouge 83 d'un récipient témoin, par exemple, en cas de défaillance de la sonde infrarouge.

Dans un mode de réalisation, l'installation de remplissage comprend au moins un moyen visuel 71 configuré pour afficher, par exemple, un premier message lorsqu'un remplissage est en cours d'exécution. Le moyen visuel 71 peut par exemple être configuré pour afficher un second message lorsqu'un raccord de liaison 21, 22, 23 n'est pas utilisé. C'est-à-dire lorsqu'une extrémité d'un raccord de liaison est libre, dit autrement lorsque cette extrémité n'est raccordée à aucun récipient. Le moyen visuel 71 peut aussi être configuré pour afficher le déroulement de l'exécution des tâches pendant le remplissage des récipients.

Dans un mode de réalisation, l'unité de pilotage 410 comprend des moyens de réception 411 de données de description. Ces moyens de réceptions 411 sont par exemple une interface homme-machine, ou encore un dispositif sans fil. Les données de description comprennent :
- un ensemble d'ordres de fabrication, chaque ordre de fabrication comprenant un ensemble de tâches à exécuter. L'ordre de fabrication correspond par exemple à une commande client, c'est-à-dire un nombre de récipients à remplir avec un fluide particulier.
- une durée pour chaque tâche à exécuter, chaque tâche à exécuter pouvant être mise en œuvre par le réseau de vannes de distribution 41, 42, 43, 44, 45 et les vannes de raccord de liaison 211, 221, 231.
- une durée disponible pour le remplissage du au moins un récipient. La durée disponible peut être par exemple la durée d'une nuit sans opérateur. Cette durée peut par exemple être pré enregistrée dans l'unité de pilotage 410. Cette durée disponible peut, par exemple, être égale à 8 heures ou 12 heures.

L'unité de pilotage 410 est alors configurée pour calculer un temps de remplissage égal à la somme des durées de tâches à exécuter et déterminer un ordre des tâches à exécuter de sorte que le temps de remplissage calculé est inférieur à la durée disponible. Ainsi le maximum de tâches à exécuter est réalisé, un maximum de récipients est rempli. L'unité de pilotage 410 dans un mode de réalisation, peut être configurée pour déterminer un ordre des tâches à exécuter de sorte qu'un maximum d'ordre de fabrication est exécuté. Les ordres de fabrication commencés sont alors achevés à l'issue de la durée disponible. Ainsi ce mode de réalisation permet de réduire les contrôles ou les opérations intermédiaires à réaliser par un opérateur. Par exemple, l'unité de pilotage 410 permet de réaliser deux ordres de fabrication de cinq récipients pendant la durée disponible. Ainsi l'installation de l'invention gère automatiquement à la fois la planification des remplissage(s) et les évènements pendant le remplissage.

Dans un mode de réalisation, c'est l'opérateur qui déclenche les tâches à exécuter pendant la durée disponible.

Dans un mode de réalisation, les tâches à exécuter sont celles parmi par exemple : fermeture et/ou ouverture des vannes 41, 42, 43, 44, 45, 61, 211, 221, 231, purger un raccord 21, 22, 23, faire le vide dans tout ou partie de l'installation.

Dans un mode de réalisation, l'unité de pilotage 410 peut communiquer à distance avec un dispositif d'information. Ce dispositif d'information permet de visualiser, par exemple, l'avancement de réalisation des tâches à exécuter, les mesures effectuées, enregistrées, les alarmes déclenchées.

Dans un mode de réalisation, les récipients à remplir avancent de manière automatique sur des convoyeurs. L'installation est munie d'un moyen de connexion automatisé permettant de connecter les récipients à l'installation.

Dans un mode de réalisation, l'installation de remplissage comprend un moyen de détection configuré pour vérifier que le récipient installé est compatible avec le fluide de remplissage prévu par l'ordre de fabrication. L'unité de pilotage est alors configurée pour recevoir un signal du moyen de détection et déclencher une alarme si au moins un récipient n'est pas compatible. Ce mode de réalisation particulier permet d'éviter des pollutions dans un récipient.

L'invention concerne aussi le procédé de remplissage de récipients par un fluide à une pression finale, définie par un utilisateur, au moyen d'une installation de remplissage selon l'invention. Le procédé comprend notamment une étape de mise en place des récipients, le démarrage du pilotage et l'arrêt automatique de l'installation, puis le désengagement des récipients remplis de l'installation. Grâce au procédé de l'invention, la présence d'un opérateur n'est pas nécessaire pendant le remplissage. Par ailleurs, les alarmes et le dépassement de la valeur seuil sont gérées par l'unité de pilotage 410 de façon automatique.

Dans un mode de réalisation, le procédé comprend une étape de détermination de la valeur de pression seuil, par exemple au moyen de tests simulant une surpression.

Dans un mode de réalisation, l'étape de détermination de la valeur seuil est réalisée au moyen des mesures enregistrées par l'unité de pilotage 410. Par exemple, l'opérateur vérifie que des alarmes ont été déclenchées valablement, en vérifiant par exemple qu'il y a bien une fuite ou un blocage d'une vanne.

## Revendications

1. Installation de remplissage d'au moins un récipient avec du fluide sous pression, comprenant :
- un ensemble de sources de fluides (11, 12, 13, 14, 15),
- un ensemble de raccords de liaison (21, 22, 23) d'au moins un récipient, chaque raccord de liaison (21, 22, 23) comprenant au moins une vanne de raccord (211, 221, 231),
- un réseau de vannes (41, 42, 43, 44, 45) reliant sélectivement la sortie de chaque source de fluide à chaque raccord de liaison (21, 22, 23),
- au moins un organe de commande (412) pour commander le réseau de vannes (41, 42, 43, 44, 45) et ladite au moins une vanne de raccord (211, 221, 231),
- une unité (410) de pilotage adaptée pour piloter ledit organe de commande (412),
**caractérisée en ce que** ladite installation comprend :
- une vanne de protection (61) en série entre ledit au moins un récipient et ladite au moins une vanne de raccord (211, 221, 231), et
- au moins un capteur (81) configuré pour opérer au moins une mesure de pression, et pour fournir ladite au moins une mesure à l'unité de pilotage (410), et
ladite unité de pilotage (410) est configurée pour traiter ladite au moins une mesure de pression et déclencher une alarme sonore ou visuelle lorsque ladite mesure de pression est supérieure à une valeur de pression seuil donnée, pour enregistrer ladite au moins une mesure de pression dans une base de données, et pour piloter l'organe de commande (412) automatiquement de sorte que l'organe de commande (412) commande la vanne de protection (61) et ladite vanne de raccord (211, 221, 231) simultanément en réponse audit déclenchement de l'alarme.

2. Installation de remplissage selon la revendication 1, comprenant en outre un sonomètre (82) configuré pour enregistrer un son émis à un niveau de décibel, et ladite unité de pilotage (410) est configurée pour déterminer un niveau de fuite en fonction dudit niveau de décibel dudit son émis et pour commander le réseau de vannes (41, 42, 43, 44, 45), la vanne de protection (61) et ladite vanne de raccord (211, 221, 231) en fonction dudit niveau de fuite déterminé.

3. Installation de remplissage selon l'une quelconque des revendications précédentes, comprenant une caméra thermique capturant une image thermique dudit au moins un récipient et ladite unité de pilotage (410) étant configurée pour réceptionner ladite image thermique et pour déterminer un niveau de remplissage du récipient en fonction de ladite image thermique.

4. Installation de remplissage selon l'une quelconque des revendications précédentes, dans laquelle ladite unité de pilotage (410) comporte des moyens de réception (411) de données de description, lesdites données de description comprenant :
- un ensemble d'ordres de fabrication, chaque ordre de fabrication comprenant un ensemble de tâches à exécuter,
- une durée pour chaque tâche à exécuter, chaque tâche à exécuter pouvant être mise en œuvre par le réseau de vannes (41, 42, 43, 44, 45) et les vannes de raccord (211, 221, 231),
- une durée disponible pour le remplissage dudit au moins un récipient,
ladite unité de pilotage (410) étant configurée pour calculer un temps de remplissage égal à la somme des durées de tâches à exécuter et déterminer un ordre des tâches à exécuter de sorte que le temps de remplissage calculé est inférieur à ladite durée disponible, que ledit temps de remplissage est minimal et qu'un maximum d'ordres de fabrication est exécuté pendant ladite durée disponible.

5. Installation de remplissage selon la revendication 4, dans laquelle les tâches à exécuter sont parmi : fermeture et/ou ouverture des vannes (41, 42, 43, 44, 45, 61, 211, 221, 231), purger un raccord de liaison (21, 22, 23), faire le vide dans tout ou partie de l'installation.

6. Installation de remplissage selon l'une quelconque des revendications précédentes comprenant au moins un moyen visuel (71) configuré pour afficher un premier message lorsqu'un remplissage est en cours d'exécution et/ou pour afficher un second message lorsqu'une extrémité d'un raccord de liaison (21, 22, 23) est libre.

7. Installation de remplissage selon l'une quelconque des revendications précédentes comprenant un détecteur de gaz configuré pour réaliser une mesure de concentration d'au moins un gaz et pour fournir ladite mesure de concentration dudit gaz à l'unité de pilotage (410), ladite unité de pilotage (410) étant configurée pour déclencher une alarme sonore ou visuelle lorsque ladite mesure de concentration est supérieure à une valeur de concentration seuil prédéfinie et/ou pour piloter l'organe de commande (412) automatiquement en fonction de ladite mesure de concentration.

8. Procédé de remplissage de récipients par un fluide à une pression finale au moyen d'une installation de remplissage selon les revendications 1 à 7 comprenant les étapes suivantes :
- mise en place et raccordement d'au moins un récipient dans l'installation au moyen du raccord de liaison (21, 22, 23),
- démarrage du pilotage automatique de l'installation au moyen de l'unité de pilotage (410),
- désengagement des récipients remplis.

9. Procédé de remplissage selon la revendication 8 comprenant une étape de détermination de ladite valeur de pression seuil.
